(19) Europäisches Patentamt
European Patent Office
Office européen des brevets

(11) EP 2 983 274 B1

(12) EUROPEAN PATENT SPECIFICATION

(45) Date of publication and mention
of the grant of the patent:
**13.09.2017 Bulletin 2017/37**

(51) Int Cl.:
*H02K 3/12* *(2006.01)*   *H02K 3/34* *(2006.01)*
*H02K 15/085* *(2006.01)*

(21) Application number: **15170719.7**

(22) Date of filing: **04.06.2015**

(54) **STRAND CROSS SECTION VARIATION FOR INCREASING FILL FACTOR IN ELECTRIC MACHINE WINDING SLOTS**

LITZENQUERSCHNITTVARIATIONEN ZUM ERHÖHEN DES FÜLLFAKTOR ELEKTROMASCHINENWINDUNGSNUTEN

VARIATION DU COUPE TRANSVERSALE DE BRIN POUR AUGMENTRE LE FACTEUR DE REMPLISSAGE DANS LES ENCOCHES DU BOBINAGE D'UNE MACHINE ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.08.2014 US 201414450520**

(43) Date of publication of application:
**10.02.2016 Bulletin 2016/06**

(73) Proprietor: **Hamilton Sundstrand Corporation Windsor Locks, CT 06096-1010 (US)**

(72) Inventors:
• **LYNCH, Matthew E.**
**Canton, CT Connecticut 06019 (US)**
• **TANGUDU, Jagadeesh**
**South Windsorq, CT Connecticut 06074 (US)**
• **JAGDALE, Vijay**
**Manchester, CT Connecticut 06042 (US)**
• **IBRAHIM EL-WARDANY, Tahany**
**Bloomfield, CT Connecticut 06002 (US)**
• **SCHMIDT, Wayde R.**
**Pomfret Centre, CT Connecticut 06259 (US)**
• **VERONESI, William A.**
**Hartford, CT Connecticut 06114 (US)**

(74) Representative: **Leckey, David Herbert**
**Dehns**
**St Bride's House**
**10 Salisbury Square**
**London EC4Y 8JD (GB)**

(56) References cited:
**WO-A1-01/75912       US-A1- 2012 238 142**
**US-A1- 2014 035 423**

**Description**

FIELD OF THE INVENTION

The subject matter disclosed herein relates to the field of electric machines and other electromagnetic devices, and to strand cross-sections and stacked conducting strands for high fill-factor electric machine windings.

DESCRIPTION OF RELATED ART

Typically, conventional electric machines are limited by their slot fill-factors. Slot fill factor of a stator winding placed inside a stator slot (hereinafter "slot") is a critical design parameter for achieving higher power densities. Slot fill factor is defined as a portion of a slot cross-section in a stator that is occupied by a conductive material, typically copper wire. Conventional electric machines use individual wires, which can have a circular- or a rectangular cross-section. In prior art slot cross-sections, typically one cross-section shape of conductor strand (e.g. circle) is used to fill a slot and, therefore, the slot cannot always be filled to its maximum efficiency. There are "unused" portions or gaps in the slot where the given strand cannot be placed. To illustrate, the maximum possible efficiency of packing circular wires is limited by the maximum efficiency of stacking cylinders: 78.5% of the cross-section area for a square unit cell (simple cubic symmetry). But, the packing efficiency never reaches an ideal limit due to the relatively thick insulation between individual wires. In actual practice, an effective conductor fill-factor for a distributed winding is in the range of about 30 percent to about 40 percent and the effective conductor fill-factor for a concentrated winding is in the range of about 50 percent to about 60 percent.

Further, conventional electric machine windings use numerous small solid section strands whose cross-sectional dimensions are limited and decided by the skin effect and proximity effect. Use of numerous strands of individually small cross-sectional area maximizes the combined current-carrying conductor cross section in the slot. Windings are comprised of a multiplicity of small strands in order to overcome the skin effect, which limits current to the outer skin (having a skin depth $\delta$) of a conductor carrying alternating current with angular frequency $\omega = 2*pi*f$, where f is maximum fundamental frequency. Having many strands of small cross-section area maximizes the effective current-carrying cross section. An electric machine winding that can use shape-conforming conductors to increase slot fill factor is desired.

US2014/035423A1 describes the production of electric machines such as induction motors or generators.

BRIEF SUMMARY

According to the invention, a winding configuration as according to claim 1 is disclosed. The winding slot includes a slot cavity with a cross-section area and the plurality of distributed conductor strands are configured to maximize slot fill factor.

Technical function of one or more of the features described above include providing conductor strands in a slot that maximizes slot fill factor of electric machines. The conductor strands and its associated insulator can be manufactured through additive manufacturing or conventional methods that facilitate filling the slot with the conductor strands and insulator.

Other aspects, features, and techniques of the invention will become more apparent from the following description taken in conjunction with the drawings.

BRIEF DESCRIPTION OF THE SEVERAL VIEWS OF THE DRAWINGS

The subject matter, which is regarded as the invention, is particularly pointed out and distinctly claimed in the claims at the conclusion of the specification. The foregoing and other features and advantages of the invention are apparent from the following detailed description taken in conjunction with the accompanying drawings in which like elements are numbered alike in the several FIGURES:

FIG. 1 is a schematic cross-section view of a stator slot that is arranged with manifold conductor strands in accordance with an example;

FIGS. 2A-2C illustrate schematic cross-section views of exemplary strands that are used in the stator slot of FIG. 1 in accordance with an example;

FIGS. 3A-3F depict exemplary shapes and arrangement of conductor strands for use with the stator slot in FIG. 1 in accordance with an example;

FIG. 4 illustrate schematic cross-section views of radially stacked conductor strands in accordance with an embodiment of the invention;

FIG. 5 illustrates an arbitrarily shaped slot that uses slot topology-conforming shapes of radially stacked conductor strands in accordance with an embodiment of the invention;

FIGS. 6A-6D illustrate exemplary coil windings in a stator slot with radially stacked conductor strands in accordance with an embodiment of the invention; and

FIGS. 7A-7E illustrates an arrangement of radially stacked conductor strands with exemplary outer shapes in accordance with an embodiment of the invention.

## DETAILED DESCRIPTION OF THE INVENTION

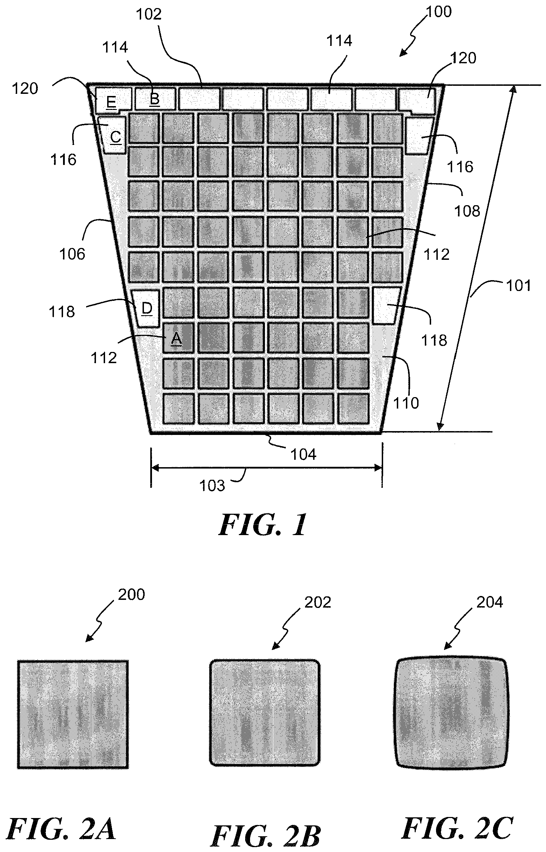

With reference to the figures, FIG. 1 depicts an exemplary winding arrangement of manifold conductor strands in a slot of a stator of an electric machine, e.g., an electric motor in accordance with an example. Only one slot 100 of a stator with an exemplary arrangement of conductor strands is shown and described for clarity. In one example, a total cross-section area of slot 100 has a trapezoidal shape and can include manifold conductor strands of various cross-sectional shapes that are arranged orthogonally to the plane of the slot cross-section area (i.e., with cross sectional shapes 112 stacked along both dimension 101 and dimension 103 of the slot 100) in order to increase the packing or fill factor of slot 100. While a trapezoidal cross-section shaped slot 100 is described and shown in FIG. 1, other slots with square, rectangular, triangular, or polygon cross-sections can also be used in accordance with embodiments of the invention.

In an example, manifold conductor strands can be made from conductive metals such as but not limited to copper, aluminum, silver, or a combination of these conductive metals. Also, slot 100 can include substantially similar conductor strands 112 with a substantially similar cross-section area A disposed between slot top or side 102 and slot bottom or side 104 in slot cavity. Conductor strands 112 are packed into slot 100 as tightly as possible and fill as much of the slot cross-section. In gap 110 of slot cavity where conductor strands 112 cannot be placed due to interference with slot walls 106 and 108, other rectangular or polygonal cross-section shaped conductor strands are introduced in order to maximize fill factor of total slot cross-section area. For example, slot 100 includes strand 114 with a cross-section area B, strand 116 with a cross-section area C, strand 118 with a cross-section area D, and strand 120 with a cross-section area E. Each additional strand 114-120 has a cross-section area that is equal to cross-section area A of strand 112 in order to provide equivalent impedance among all conductor strands. An insulation matrix is used between each strand 112-120 that insulates each conductor strand and prevents shorting out of the electric machine. The insulation matrix can be made from ceramic, glass, and/or polymers.

By introducing manifold strands with diverse cross-section shapes in gap 110, areas in gap 110 that would otherwise be filled by an insulation matrix can be filled by conductor strands, thereby maximizing slot fill-factor. In embodiments, arrangement of conductor strands can be a "basis shape" (e.g., a square cross-section 112 shape of FIG. 1) that is used to fill a majority of the volume in gap 110 of slot cavity and using other space-filling cross-section shapes where a basis shape is not used.

The conductor strands 112-120 can be manufactured through various manufacturing methodologies. In an example, a cross-section of a honeycomb structure for the insulation matrix can be made for different types of honeycomb structures, for example, honeycomb structures being regular, irregular, customized, etc. The honeycomb structure can be made through extrusion, casting, additive manufacturing, and molten copper can be back-filled in the honeycomb structure to define conductor strands. Methods to make the strand layout can include traditional methods of manufacturing by carefully placing these strands shapes together with their insulation and filling the slot appropriately. In another embodiment, additive manufacturing can be utilized to deposit each of the manifold conductor strands 112-120 of a desired cross-section and the insulation matrix in the slot cavity and within the conductor strands 112-120 in order to provide highly packed conductor strands with good feature control. Alternatively, or in addition to the manufacturing methods described above, either the conductor or insulator can be separately manufactured initially and then backfilled with the other. Either or both of the conductor and the insulating matrix could be done with additive manufacturing. In another example, additive manufacturing can be utilized to deposit each of the manifold conductor strands 112-120 of a desired cross-section in the slot cavity and the insulation matrix can be introduced afterward using a process other than additive manufacturing. In an example, integrated additive manufacturing can be used to incorporate manufacturing of conductor strands that is integrated with manufacturing of the insulation matrix. The stator slots may be fabricated individually and then the stator may be assembled with iron core layers or additive manufacturing may be utilized to make the slots and core simultaneously.

Benefits of additive manufacturing include the capability of producing highly packed windings as well as good feature control. In addition, an optimized configuration can include hollow regions at one or more locations within the arrangement of conductor strands, e.g., conductor strands 112-120. These hollow regions can be configured to provide a channel for carrying fluid-based coolant through the slot in order to provide closed loop cooling to each slot. As one or more cooling channels are provided to be immediately adjacent to current carrying conductor strands that generate heat, cooling will be efficient and effective due to being close to the source of the heat.

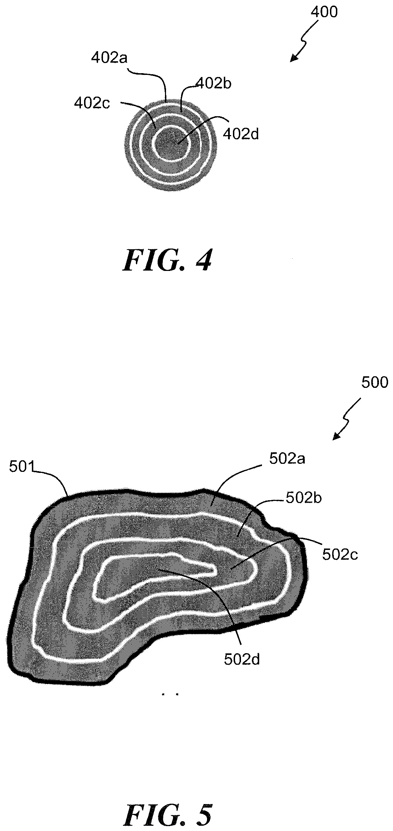

While the arrangement of conductor strands 112-120 has been described in accordance with an exemplary arrangement or packing of conductor strands in a slot 100, it is to be understood that aspects of the invention may include other slot shapes and other conductor strands of any cross-section shape. In an embodiment, as shown in FIGS. 2A, 2B, and 2C, conductor strands, e.g., strands 112-120 can include exact polygonal conductor strands as well as conductor strands based on polygons with rounded corners, rounded faces, or other similar rounded features. FIG. 2A illustrates an example polygon conductor strand 200 with sharp corners, FIG. 2B illustrates an example polygon conductor strand 202 shape with rounded corners, and FIG. 2C illustrates an example polygon conductor strand 204 with rounded faces. Rounded corners can be introduced to avoid mechanical or thermal stress risers and/or to avoid undesirable electromagnetic effects arising from sharp features. It also increases the insulation thickness and maximizes breakdown strength. Rounding during manufacturing can be produced, for instance, by additive manufacturing. Also, other conductor packing schemes are contemplated, depending on application and design strategy. In an embodiment, if slot side 102 is shaped in an arc fashion, then the packing arrangement of conductors strands can include conformally-shaped conductor strands immediately adjacent to slot bottom 102 that mimic the shape of arc shaped slot bottom with other polygonal shaped conductor strands with, for example, a rectangular cross-section can be used for achieving a higher fill factor. The choice of strand sizes and/or cross-section shapes can also be defined by considering the skin effect inherent to conductors that carry alternating electrical current, as will be described below in FIGS. 4-7E.

In embodiments, layout of conductor strands described in the enclosed embodiments can also be optimized. In an example, conductor strand packing in a slot may be determined on the basis of maximizing the fraction of the slot cross section devoted to conductor material subject to the constraints associated with requirements for insulation between strands. Slot packing can also be constrained by matching strand cross-section areas and limit aspect ratios to avoid eddy current losses due to slot leakage and other flux components. Applicable optimization schemes include, but are not limited to, optimization of size of strands, shape of strands, aspect ratios of strands, number of strands, and optimum combinations of sizes, shape, and number. Tailoring strand shapes provides flexibility in the design of electric machines. Slots can take on any cross-section shape due to the ability to fill such shapes with conductor strands. Also, conductor strand shapes may be informed by conductor pathway planning for electric machine end-turns.

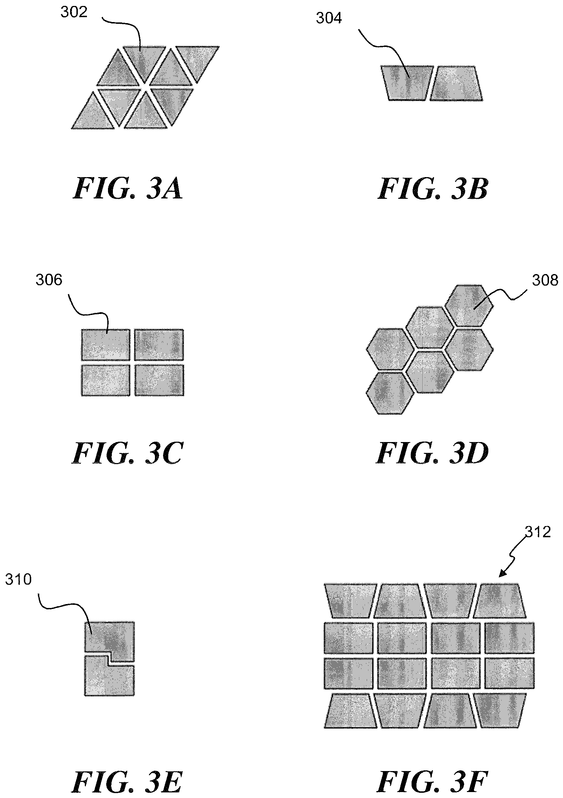

FIGS. 3A-3E illustrate exemplary cross-section shapes of conductor strands that can be used with the invention while FIG. 3F illustrates an exemplary packing arrangement 312 of slots using more than one type of the polygons of FIGS. 3A-3E. A wide variety of polygon cross-section shaped conductor strands can be used to fill the slot 100 including, but not limited to, triangles 302 (FIG. 3A), quadrilaterals 304 and 306 (FIGS. 3B and 3C), hexagons 308 (FIG. 3D), and n-sided concave polygons 310 (FIG. 3E) that can be both a basis shape as well as can be used in combination with other polygon shapes to either fill an entire slot or to fill gaps around the edges of the slot. While not shown in FIGS. 3A-3E, a conductor strand can also include a generic freeform cross section shape.

In accordance with other embodiments, as shown in FIGS. 4-7E, exemplary cross-section shapes of radially stacked conductor strands that leverage the skin effect of current carrying conductors is depicted. In a conductor strand carrying an alternating current ("AC") current, skin effect limits the AC current to the outer skin (having skin depth δ) of the conductor strand. Skin depth is given by Equation (1):

$$\delta = \sqrt{\frac{2\rho}{\omega\mu}} \qquad (1)$$

Where:

     $\delta$ = skin depth;
     $\rho$ = resistivity of the conductor;
     $\omega$ = angular frequency of current; and
     $\mu$ = absolute magnetic permeability of the conductor.

Literature indicates skin depth can carry a significant percentage of the AC current close to the outer surface of the conductor. For a given cross-section shape and dimension of the conductor, hollow conductor sections can be utilized as conductor sections that are also more space efficient than solid sections. In order to leverage the skin effect as well as maximize form fill-factor of slots, radially stacked conductor strands can be used in accordance with an embodiment of the invention.

As shown in FIG. 4, strand assembly 400 includes radially stacked conductor strands 402a, 402b, 402c, and 402d that have a nested configuration with a minimum thin insulation later separating conductor strands 402a-402d (i.e., an inner conductor strand, e.g., strand 402c, is contained within a bore of an outer conductor strand, e.g., conductor strand 402b). The nested configuration can be used to mitigate the effects of skin effect. Each conductor strand would have the same resistance in the winding.

In another embodiment, for an arbitrarily shaped slot 501, as shown in FIG. 5, in order to increase slot fill-factor, slot topology-conforming shapes of radially stacked conductor strands 502a-502d in strand assembly 500 can be utilized in order to mitigate the effects of skin effect as well as provide efficient fill-factor of slot 500. Windings that use radially stacked conductor strands can maximize slot fill factor.

In addition, an optimized configuration due to varied design constraints may result in hollow regions at the center of the radial stack, depending on starting shapes utilized and aspect ratios. Such hollow regions can be used to provide a channel for fluid-based coolant that provides closed loop cooling to each slot. Additionally, the center conductor strand can be made intentionally hollow and not be a current carrying conductor in order to provide cooling by circulating a fluid-based coolant to remove heat from the slot. As the cooling channel is provided to be immediately adjacent to the current carrying conductor strands that generate heat, cooling will be efficient and effective due to being close to the source of heat.

The radially stacked conductor strands, for example, radially stacked conductor strands in strand assemblies 400 and 500 can be manufactured through various manufacturing methodologies. In an embodiment, a cross-section of a honeycomb structure for insulation can be made for different types of honeycomb structures, for example, honeycomb structures being regular, irregular, customized, etc. The honeycomb structure can be made through extrusion, casting, or additive manufacturing, and molten copper can be back-filled in the honeycomb structure to define conductor strands, or can include traditional methods of manufacturing by carefully placing these strands shapes and filling the slot appropriately. In another embodiment, additive manufacturing can be utilized to deposit each of the strand assemblies 400 or 500 of a desired cross-section and insulation, for example, ceramic, glass, and/or polymers between the conductor strands in order to provide highly packed conductor strands with good feature control. Alternatively, or in addition to the manufacturing methods described above, either the conductor or insulator can be separately manufactured initially and then backfilled with the other. Either or both of the conductor and the insulating matrix could be done with additive manufacturing. In another embodiment, additive manufacturing can be utilized to deposit each of the manifold conductor strands 112-120 of a desired cross-section in the slot cavity and the insulation matrix can be introduced afterward using a process other than additive manufacturing. In another embodiment, integrated additive manufacturing can be used to incorporate manufacturing of conductor strands integrated with manufacturing of the insulation matrix. Benefits of additive manufacturing include the capability of producing highly packed windings as well as good feature control. In addition, an optimized configuration can include hollow regions at one or more locations within the arrangement of radially stacked conductor strands. For example, as shown in FIG, 5, conductor strands 502a-502d and insulation matrix can be integrally manufactured with one or more areas being left hollow. These hollow regions can be configured to provide a channel for carrying fluid-based coolant through the slot in order to provide closed loop cooling to each slot. As one or more cooling channels are provided to be immediately adjacent to the current carrying conductor strands that generate heat, cooling will be efficient and effective due to being close to the source of heat.

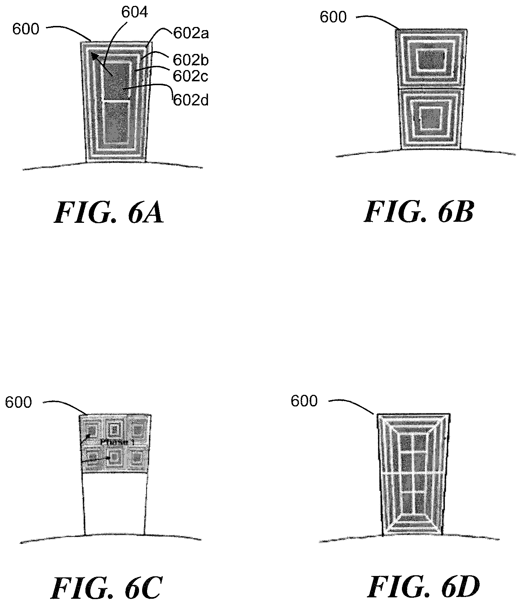

For a conventional slot shape, other configurations of radially stacked conductor strand substantially similar to conductor strands 402a-405d of FIG. 4 can be used. FIG. 6A illustrates an exemplary coil winding for a single phase AC current and FIG. 6B illustrates an exemplary coil winding for a dual-phase AC current. Also, as shown in FIG. 6C, in order to reduce the eddy current losses on the surface of the conductor strand due to slot leakage inductance, the windings can be composed of multiple radially stacked conductor strands individually acting as turns. As shown in FIG. 6D, slot-conforming multiple conductor strands can be split to be discontinuous due to design constrains such as, for example, limits on aspect ratio along iron core radius, due to eddy current losses. It is to be appreciated that width or thickness of individual conductor strands can be based on near constant cross-sectional area criteria and proximity effect. For example, due to a difference in mean circumference of each conductor strand in a radial direction, in order to keep near constant cross-sectional area in each conductor strand, the outer conductor strands would have to be smaller in thickness as compared to inner conductor strands, For example, in FIG. 6A, moving radially from center conductor strand 602d to outer conductor strand 602a, inner conductor strand 602d would have the largest thickness that correspondingly reduces as the slot is traversed radially in direction of arrow 604 to outer conductor strand 602a. Also, the mean length travelled by individual conductor strands, in a turn, would also be different based on its radial location in the stack. For example, a length travelled by the mean circumference of outer strand 602a would be greater than a length travelled by inner strand 602d, requiring outer strand 602a to be of smaller thickness than the inner strands, in order to maintain the same resistance in each conductor strand.

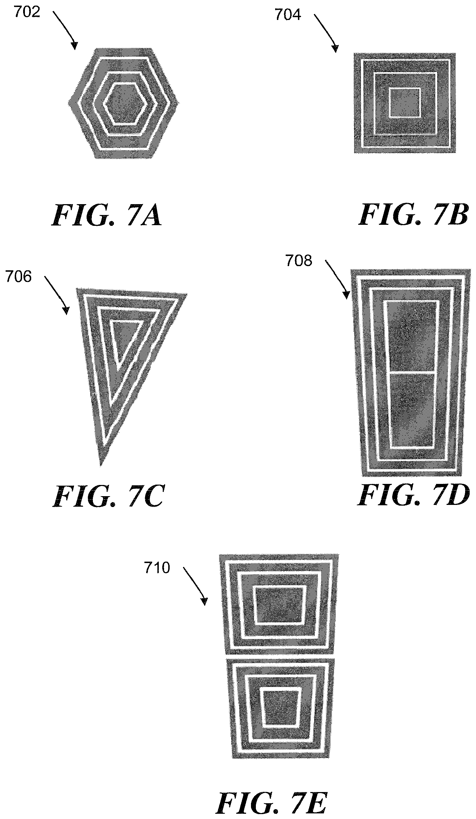

In other embodiments, as shown in FIGS. 7A-7E, radially stacked conductor strands 702, 704, 706, 708, and 710 have various cross-section shapes that can be used in stator slots. In addition to using the radially stacked conductor shapes of FIGS 7A-7E to fill a majority of the slot, the remaining slot space can be filled with a variety of conductor strand cross-section shapes without a dominant shape. Limits on aspect ratios can also be selected in order to reduce eddy current losses.

The cross-section shape of the radially stacked conductor strands in FIGS.6A-7E , number of groups (or turns) of radially stacked conductor strands per phase, number of conductor strands in a radial direction of a turn and thickness of individual conductor strands can also be optimized based on various winding requirements and constraints. Some of the requirements and constraints can include, but are not limited to, skin effect, proximity effect eddy current losses on the surface of individual conductor strands due to slot leakage inductance, voltage requirements, or the like. Additionally, these constraints may be defined by conductor pathway planning for electric machine end-turns.

Embodiments of the invention disclosed herein for application to electric machines provide increased fill factor of electric machine windings. Using increased portions of the slot enables ultra-power dense electric machines.

The terminology used herein is for the purpose of describing particular embodiments only and is not intended to be limiting of the invention. While the description of the present invention has been presented for purposes of illustration and description, it is not intended to be exhaustive or limited to the invention in the form disclosed. Many modifications, variations, alterations, substitutions or equivalent arrangements not hereto described will be apparent to those of ordinary skill in the art without departing from the scope of the invention. Additionally, while the various embodiments of the invention have been described, it is to be understood that aspects of the invention may include only some of the described embodiments. Accordingly, the invention is not to be seen as limited by the foregoing description, but is only limited by the scope of the appended claims.

**Claims**

1. A winding configuration for an electric machine, comprising:

   a stator core with a plurality of winding slots; (100)
   a plurality of conductor strands (112...) distributed in a winding slot (100) of the plurality of winding slots (100); and
   an insulation matrix that surrounds each of the plurality of the conductor strands (112...);
   wherein the winding slot (100) includes a slot cavity with a cross-section area; and
   wherein the plurality of conductor strands (402; 502; 602; 702...710) are configured to be radially stacked with different cross-section areas; and
   wherein at least one of the insulation matrix and the plurality of conductor strands (112...) is deposited in the slot cavity through additive manufacturing; and **characterized by** a radially inner conductor strand (402d; 502d; 602d) being contained within a bore of a radially outer conductor strand (402c; 502c; 602c) in a nested configuration.

2. The winding configuration of claim 1, wherein each conductor strand (112...) is one of copper, aluminum, silver, or a combination of copper, aluminum, and silver

3. The winding configuration of claim 1 or 2, wherein the insulation matrix is one of ceramic, glass, polymer, and a glass-filled polymer

4. The winding configuration of any preceding claim, wherein the insulation matrix is configured as a honeycomb structure.

5. The winding configuration of claim 4, wherein the honeycomb structure that defines each of the plurality of conductor strands (112...) is filled with a conductive material by casting or other process.

6. The winding configuration of any preceding claim, wherein each of the plurality of conductor strands (112...) is arranged orthogonally to the cross-section area to define the slot fill factor.

7. The winding configuration of any preceding claim, wherein the plurality of conductor strands are configured to be radially stacked with each radially stacked conductor strand acting as a turn.

8. The winding of configuration of claim 7, wherein the radial stacking is configured to conform to the slot topology.

9. The winding configuration of any preceding claim, wherein at least one of the plurality of conductor strands (112...) includes a cross-section area selected from one of a triangle, a trapezoid, a quadrilateral, a hexagon, a concave polygon, or a generic freeform cross section shape.

10. The winding configuration of any preceding claim, wherein either of the plurality of conductor strands or the insulation matrix can be initially manufactured or placed in the slot cavity and then filled through casting or other method with the other material.

11. The winding configuration of any of claims 1 to 9, wherein each of the plurality of conductor strands of a desired cross-section is deposited in the slot cavity through additive manufacturing and the insulation matrix is later introduced using an extrusion, casting, or other process.

12. The winding configuration of any of claims 1 to 9, wherein integrated additive manufacturing is used to manufacture the plurality of conductor strands simultaneously with manufacturing of the insulation matrix.

**Patentansprüche**

1. Wicklungskonfiguration für eine elektrische Maschine, umfassend:

   einen Statorkern mit einer Vielzahl von Wicklungsschlitzen (100) ;
   eine Vielzahl von Leiterlitzen (112...), die in einem Wicklungsschlitz (100) der Vielzahl von Wicklungsschlitzen (100) verteilt ist; und
   eine Isolationsmatrix, die jede der Vielzahl von Leiterlitzen (112...) umgibt;
   wobei der Wicklungsschlitz (100) einen Schlitzhohlraum mit einem Querschnitt beinhaltet; und
   wobei die Vielzahl von Leiterlitzen (402; 502;

602; 702...710) dazu konfiguriert ist, radial mit unterschiedlichem Querschnitt gestapelt zu sein; und wobei wenigstens eine von der Isolationsmatrix und der Vielzahl von Leiterlitzen (112...) in dem Schlitzhohlraum durch additive Fertigung aufgebracht ist; und **gekennzeichnet durch**

eine radial innere Leiterlitze (402d; 502d; 602d), die in einer verschachtelten Konfiguration in einer Bohrung einer radial äußeren Leiterlitze (402c; 502c; 602c) enthalten ist.

2. Wicklungskonfiguration nach Anspruch 1, wobei jede Leiterlitze (112...) wahlweise aus Kupfer, Aluminium, Silber oder einer Kombination aus Kupfer, Aluminium und Silber besteht.

3. Wicklungskonfiguration nach Anspruch 1 oder 2, wobei die Isolationsmatrix wahlweise aus Keramik, Glas, Polymer und einem glasgefüllten Polymer besteht.

4. Wicklungskonfiguration nach einem der vorangehenden Ansprüche, wobei die Isolationsmatrix als eine Wabenstruktur konfiguriert ist.

5. Wicklungskonfiguration nach Anspruch 4, wobei die Wabenstruktur, die eine jede der Vielzahl von Leiterlitzen (112...) definiert, durch Gießen oder einen anderen Prozess mit einem leitfähigen Material gefüllt wird.

6. Wicklungskonfiguration nach einem der vorangehenden Ansprüche, wobei eine jede der Vielzahl von Leiterlitzen (112...) orthogonal zum Querschnitt angeordnet ist, um den Schlitzfüllfaktor zu definieren.

7. Wicklungskonfiguration nach einem der vorangehenden Ansprüche, wobei die Vielzahl von Leiterlitzen dazu konfiguriert ist, radial gestapelt zu sein, wobei jede radial gestapelte Leiterlitze als eine Windung dient.

8. Wicklung der Konfiguration nach Anspruch 7, wobei die radiale Stapelung dazu konfiguriert ist, der Schlitztopologie zu entsprechen.

9. Wicklungskonfiguration nach einem der vorangehenden Ansprüche, wobei wenigstens eine der Vielzahl von Leiterlitzen (112...) einen Querschnitt beinhaltet, der ausgewählt ist aus einem von einem Dreieck, einem Trapez, einem Vierseiter, einem konkaven Vieleck oder einer allgemeinen Freiformquerschnittform.

10. Wicklungskonfiguration nach einem der vorangehenden Ansprüche, wobei eine der Vielzahl von Leiterlitzen oder der Isolationsmatrix zunächst in dem Schlitzhohlraum gefertigt oder aufgebracht und dann durch Gießen oder ein anderes Verfahren mit dem anderen Material gefüllt sein kann.

11. Wicklungskonfiguration nach einem der Ansprüche 1 bis 9, wobei eine jede der Vielzahl von Leiterlitzen mit einem gewünschten Querschnitt in dem Schlitzhohlraum durch additive Fertigung angeordnet wird und die Isolationsmatrix später mittels eines Extrusions-, Gieß- oder anderen Prozesses eingebracht wird.

12. Wicklungskonfiguration nach einem der Ansprüche 1 bis 9, wobei eine integrierte additive Fertigung verwendet wird, um die Vielzahl von Leiterlitzen gleichzeitig mit dem Fertigen der Isolationsmatrix zu fertigen.

**Revendications**

1. Configuration de bobinage pour une machine électrique, comprenant :

   un noyau de stator avec une pluralité d'encoches de bobinage ; (100)
   une pluralité de brins conducteurs (112...) distribués dans une encoche de bobinage (100) de la pluralité d'encoches de bobinage (100) ; et
   une matrice d'isolation qui entoure chacun de la pluralité des brins conducteurs (112...) ;
   dans laquelle l'encoche de bobinage (100) comprend une cavité d'encoche avec une zone de coupe transversale ; et
   dans laquelle la pluralité de brins conducteurs (402 ; 502 ; 602 ; 702...710) sont conçus pour être empilés radialement avec des zones de coupe transversale différentes ; et dans laquelle au moins l'une parmi la matrice d'isolation et la pluralité de brins conducteurs (112...) est disposée dans la cavité d'encoche par l'intermédiaire d'une fabrication additive ; et **caractérisée par** un brin conducteur radialement interne (402d ; 502d ; 602d) étant contenu à l'intérieur d'un alésage d'un brin conducteur radialement externe (402c ; 502c ; 602c) dans une configuration emboîtée.

2. Configuration de bobinage selon la revendication 1, dans laquelle chaque brin conducteur (112...) est l'un parmi le cuivre, l'aluminium, l'argent, ou une combinaison du cuivre, de l'aluminium et de l'argent.

3. Configuration de bobinage selon la revendication 1 ou 2, dans laquelle la matrice d'isolation est l'un parmi la céramique, le verre, un polymère et un polymère rempli de verre.

4. Configuration de bobinage selon une quelconque revendication précédente, dans laquelle la matrice d'isolation est conçue en tant que structure en nid d'abeille.

5. Configuration de bobinage selon la revendication 4, dans laquelle la structure en nid d'abeille qui définit chacun de la pluralité de brins conducteurs (112...) est remplie d'un matériau conducteur par coulage ou un autre procédé.

6. Configuration de bobinage selon une quelconque revendication précédente, dans laquelle chacun de la pluralité de brins conducteurs (112...) est agencé de manière orthogonale par rapport à la zone de coupe transversale pour définir le facteur de remplissage d'encoche.

7. Configuration de bobinage selon une quelconque revendication précédente, dans laquelle la pluralité de brins conducteurs sont conçus pour être empilés radialement et chaque brin conducteur empilé radialement agissant en tant que tour.

8. Configuration de bobinage selon la revendication 7, dans laquelle l'empilement radial est conçu pour s'adapter à la topologie d'encoche.

9. Configuration de bobinage selon une quelconque revendication précédente, dans laquelle au moins l'un de la pluralité de brins conducteurs (112...) comprend une zone de coupe transversale sélectionnée parmi l'un d'un triangle, d'un trapèze, d'un quadrilatère, d'un hexagone, d'un polygone concave ou d'une forme de coupe transversale à forme libre générique.

10. Configuration de bobinage selon une quelconque revendication précédente, dans laquelle chacune de la pluralité de brins conducteurs ou de la matrice d'isolation peut être initialement fabriquée ou placée dans la cavité d'encoche et ensuite remplie par coulage ou un autre procédé avec l'autre matériau.

11. Configuration de bobinage selon l'une quelconque des revendications 1 à 9, dans laquelle chacun de la pluralité de brins conducteurs d'une coupe transversale souhaitée est disposé dans la cavité d'encoche par l'intermédiaire d'une fabrication additive et la matrice d'isolation est ensuite introduite à l'aide d'un procédé d'extrusion, de coulage ou un autre procédé.

12. Configuration de bobinage selon l'une quelconque des revendications 1 à 9, dans laquelle la fabrication additive intégrée est utilisée pour fabriquer la pluralité de brins conducteurs en même temps que la fabrication de la matrice d'isolation.

**FIG. 1**

**FIG. 2A**       **FIG. 2B**       **FIG. 2C**

302

**FIG. 3A**

304

**FIG. 3B**

306

**FIG. 3C**

308

**FIG. 3D**

312

310

**FIG. 3E**

**FIG. 3F**

**FIG. 4**

**FIG. 5**

600 604 602a 602b 602c 602d

**FIG. 6A**

600

**FIG. 6B**

600 Phase 1

**FIG. 6C**

600

**FIG. 6D**

702

**FIG. 7A**

704

**FIG. 7B**

706

**FIG. 7C**

708

**FIG. 7D**

710

**FIG. 7E**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014035423 A1